# FASCICULE DE BREVET EUROPEEN

(11) **EP 1 282 533 B1**
(45) Date de publication et mention de la délivrance du brevet: **15.07.2009**
(21) Numéro de dépôt: 01936508.9
(22) Date de dépôt: 14.05.2001
(51) Int. Cl.: B60H 1/00

(54) **DISPOSITIF OPTIMISE DE REGULATION THERMIQUE A POMPE A CHALEUR POUR VEHICULE AUTOMOBILE**
OPTIMIERTES, THERMISCHES REGELSYSTEM MIT WÄRMEPUMPE FÜR KRAFTFAHRZEUGE
OPTIMISED HEAT PUMP TEMPERATURE CONTROL DEVICE FOR MOTOR VEHICLE

(30) Priorité: 15.05.2000 FR 0006116; 03.04.2001 FR 0104532
(43) Date de publication de la demande: 12.02.2003
(73) Titulaire: Peugeot Citroën Automobiles SA, 92200 Neuilly sur Seine (FR); Visteon Global Technologies, Inc., Dearborn, Michigan 48126-2490 (US)
(72) Inventeur: AMARAL, Manuel, F-94400 Vitry-sur-Seine (FR); COUTAUX, Emmanuel, F-92250 La Garenne Colombes (FR); GIELDA, Thomas, Brighton, MI 48114 (US); VOUZELAUD, Franck, F-75014 Paris (FR)
(74) Mandataire: de la Bigne, Guillaume Michel Marie
(86) Numéro de dépôt international: PCT/FR2001/001458
(87) Numéro de publication internationale: WO 2001/087651

(56) Documents cités:
- EP-A- 0 999 078
- DE-A- 19 930 148
- US-A- 5 421 169
- US-A- 6 038 877

## Description

La présente invention concerne un dispositif optimisé de régulation thermique à pompe à chaleur pour véhicule automobile.

Elle s'applique en particulier à la climatisation d'un habitacle du véhicule automobile.

On connaît déjà dans l'état de la technique, notamment d'après FR-2 697 210, un dispositif de régulation thermique pour véhicule automobile, du type comprenant :
- une pompe à chaleur (12) comportant un circuit principal (14) de fluide frigorigène à compression prélevant des calories d'une source froide (16) pour les transférer vers une source chaude (18),
- la source froide (16) comportant un premier échangeur thermique (24) fluide frigorigène/liquide caloporteur couplant thermiquement le circuit principal (14) de fluide frigorigène à un premier circuit secondaire (26) de liquide caloporteur.

Le circuit à compression comprend habituellement un évaporateur, en échange thermique avec la source froide, et un condenseur, en échange thermique avec la source chaude, ces éléments étant raccordés entre eux par un compresseur et un détendeur. Le fluide frigorigène se vaporise dans l'évaporateur en enlevant de la chaleur à la source froide. Le compresseur aspire le fluide frigorigène vaporisé et le refoule dans le condenseur refroidi (par échange thermique avec la source chaude) dans lequel il se condense. Le détendeur laisse passer le fluide frigorigène liquide vers l'évaporateur en abaissant sa pression.

Une pompe à chaleur peut être utilisée soit pour chauffer un espace ou un organe soit pour refroidir cet espace ou cet organe.

Dans FR-2 697 210, la source chaude comporte un second échangeur thermique fluide frigorigène/liquide caloporteur couplant thermiquement le circuit principal de fluide frigorigène à un second circuit secondaire de liquide caloporteur. Les circuits secondaires peuvent être raccordés sélectivement, par l'intermédiaire de vannes appropriées, à un échangeur thermique extérieur, placé dans le compartiment moteur du véhicule, et à un échangeur thermique intérieur, placé dans l'habitacle du véhicule. En agissant sur les vannes, on peut utiliser la pompe à chaleur soit pour réfrigérer l'habitacle d'un véhicule (dans ce premier cas, la source chaude est l'échangeur thermique extérieur et la source froide est l'échangeur thermique intérieur), soit pour réchauffer l'habitacle (dans ce second cas, la source chaude est l'échangeur thermique intérieur et la source froide est l'échangeur thermique extérieur).

On notera dans ce dernier cas que les performances de la pompe à chaleur sont limitées par la température de l'air extérieur. En effet, en saison froide, la température de l'air n'est pas suffisante pour obtenir un rendement satisfaisant de la pompe à chaleur, lorsque celle-ci est utilisée à des fins de chauffage de l'habitacle. Par ailleurs, le givrage de la source froide en saison froide peut nuire aux performances de fonctionnement de la pompe à chaleur.

Par ailleurs, la réversibilité des échangeurs extérieur et intérieur (utilisés chacun soit comme source chaude soit comme source froide) conduit essentiellement aux deux inconvénients suivants :
1) la performance de chaque échangeur est limitée du fait qu'elle ne peut pas être optimisée pour un fonctionnement spécifique de l'échangeur en source chaude ou bien en source froide ;
2) l'hygrométrie de l'air environnant l'échangeur thermique intérieur est difficile à contrôler.

Le second inconvénient se révèle tout particulièrement lors de la climatisation de l'habitacle du véhicule en mi-saison. Dans ce cas, l'échangeur thermique intérieur est susceptible de connaître de fréquentes alternances de ses modes de fonctionnement de réfrigération et de chauffage de l'habitacle. Ainsi, en mode réfrigération, l'échangeur thermique intérieur se charge d'eau. Lorsque ce dernier passe en mode chauffage, l'eau accumulée en mode réfrigération est évacuée dans l'habitacle par évaporation. FR-2 697 210 propose de pallier cet inconvénient au moyen d'un échangeur thermique auxiliaire agencé au voisinage de l'échangeur thermique intérieur. Toutefois, cet échangeur auxiliaire n'est pas fonctionnel dans certains cas notamment pour des températures de mi-saison voisines de 15°C.

EP-A-0 999 078 décrit un circuit de pompe à chaleur comprenant une source froide, une source chaude, et un échangeur thermique fluide frigorigène/liquide caloporteur couplant thermiquement le circuit à un unique circuit secondaire.

L'invention a pour but d'optimiser les performances d'un dispositif de régulation thermique à pompe à chaleur notamment lorsqu'il est utilisé pour réchauffer ou réfrigérer l'habitacle d'un véhicule automobile.

A cet effet, l'invention a pour objet un dispositif de régulation thermique pour véhicule automobile, du type décrit dans FR-2 697 210, tel que défini dans la revendication 1.

Suivant des caractéristiques de différents modes de réalisation de ce dispositif :
- les premiers moyens de raccordement sélectif comprennent des premiers moyens amont de raccordement à l'extrémité amont de la branche aérotherme et des premiers moyens aval de raccordement à l'extrémité aval de cette branche aérotherme ;
- l'échangeur froid est un échangeur liquide caloporteur/air ;
- les premiers moyens amont de raccordement sélectif comprennent une vanne, dite vanne de branche aérotherme, munie d'au moins trois voies, une première voie étant raccordée à la sortie du premier échangeur thermique fluide frigorigène/liquide caloporteur, une deuxième voie étant raccordée à l'extrémité amont de la branche aérotherme et une troisième voie étant raccordée à l'entrée de l'échangeur froid ;
- le premier circuit secondaire peut être raccordé sélectivement à un échangeur thermique dit extérieur à l'aide des premiers moyens de raccordement sélectif ;
- les premiers moyens amont de raccordement sélectif comprennent une vanne, dite vanne d'échangeur extérieur, de type trois voies, munie d'une première voie raccordée à la sortie du premier échangeur thermique fluide frigorigène/liquide caloporteur, d'une deuxième voie raccordée à l'entrée de l'échangeur extérieur et d'une troisième voie raccordée à la première voie de la vanne de branche aérotherme :

- la vanne de branche aérotherme comprend une quatrième voie raccordée à l'entrée de l'échangeur extérieur ;
- l'échangeur extérieur est un échangeur liquide caloporteur/air :

- le second circuit secondaire peut être raccordé sélectivement à l'échangeur extérieur à l'aide des deuxièmes moyens de raccordement sélectif ;
- l'extrémité aval de la branche aérotherme peut être raccordée sélectivement à l'entrée de l'échangeur chaud à l'aide des premiers moyens aval de raccordement sélectif ;
- le dispositif comprend des troisièmes moyens de raccordement sélectif de la sortie de l'échangeur chaud au second circuit secondaire de liquide caloporteur et à la branche aérotherme ;
- les troisièmes moyens de raccordement sélectif comprennent une vanne, de type trois voies, munie d'une première voie raccordée à la sortie de l'échangeur chaud, d'une deuxième voie raccordée à l'entrée du second échangeur thermique et d'une troisième voie raccordée à l'extrémité amont de la branche aérotherme ;
- l'échangeur chaud est un échangeur liquide caloporteur/air ;
- le liquide caloporteur du second circuit secondaire est un mélange d'eau est d'antigel :

- le liquide caloporteur du premier circuit secondaire et un mélange d'eau et d'antigel ;

L'invention sera mieux comprise à la lecture de la description qui va suivre, donnée uniquement à titre d'exemple et faite en se référant aux dessins dans lesquels :
- la figure 1 est une vue schématique d'un dispositif de régulation thermique pour véhicule automobile, selon un premier mode de réalisation de invention ;
- les figures 2 à 4 sont des vues partielles schématiques, analogues à la figure 1, de dispositifs de régulation thermique pour véhicule automobile, selon des deuxième à quatrième modes de réalisation de l'invention, respectivement.

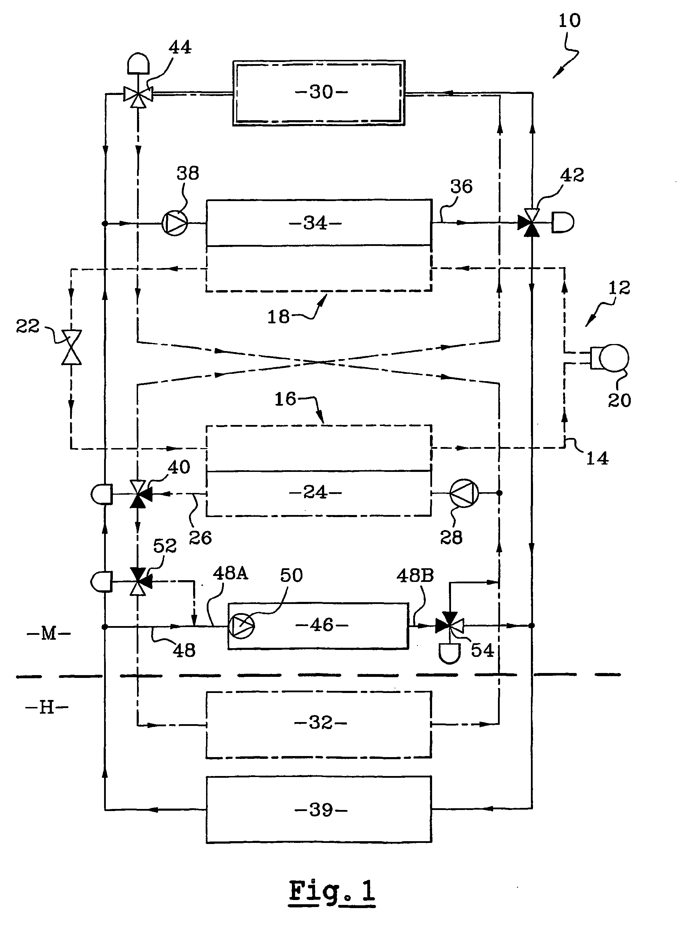

On a représenté sur la figure 1 un dispositif de régulation thermique pour véhicule automobile, selon un premier mode de réalisation de l'invention, désigné par la référence générale 10.

Dans ce qui suit, deux organes sont dits couplés thermiquement entre eux lorsqu'ils échangent de la chaleur entre eux au moyen d'un échangeur thermique approprié.

Le dispositif de régulation thermique 10 comprend une pompe à chaleur 12 comportant un circuit principal 14 de fluide frigorigène, de type à compression, prélevant des calories d'une source froide 16 pour les transférer au moins partiellement vers une source chaude 18.

Les sources froide 16 et chaude 18 sont raccordées entre elles par un compresseur 20 (électrique ou mécanique) et une vanne de détente 22. Le fluide frigorigène se vaporise en enlevant de la chaleur à la source froide 16. Le compresseur 20 aspire le fluide vaporisé et le refoule vers la source chaude où il se condense en refroidissant. La vanne de détente 22 laisse passer le fluide frigorigène liquide vers la source froide 16 en abaissant sa pression. Le sens de circulation du fluide frigorigène dans le circuit 14 est indiqué par des flèches sur la figure 1.

La source froide 16 comporte un premier échangeur thermique 24 fluide frigorigène/liquide caloporteur couplant thermiquement le circuit principal 14 de fluide frigorigène à un premier circuit secondaire 26 de liquide caloporteur. Ce dernier comporte une pompe 28 de mise en circulation du liquide caloporteur, raccordée à l'entrée du premier échangeur thermique 24.

Le premier circuit secondaire 26 peut être raccordé sélectivement à un échangeur thermique dit extérieur 30 et à un échangeur thermique dit froid 32.

Dans l'exemple illustré sur la figures 1, l'échangeur extérieur 30 est un échangeur liquide caloporteur/air, placé dans le compartiment moteur M du véhicule, et l'échangeur froid 32 est un échangeur liquide caloporteur/air, placé dans l'habitacle H du véhicule.

La source chaude 18 comporte un second échangeur thermique 34, fluide frigorigène/liquide caloporteur couplant thermiquement le circuit principal 14 de fluide frigorigène à un second circuit secondaire 36 de liquide caloporteur. Ce dernier comporte une pompe 38 de mise en circulation du liquide caloporteur, raccordée à l'entrée du second échangeur thermique 34.

Le second circuit secondaire 36 peut être raccordé sélectivement à l'échangeur extérieur 30 et à un échangeur thermique dit chaud 39.

Dans l'exemple illustré sur la figures 1, l'échangeur chaud 39 est un échangeur liquide caloporteur/air placé dans l'habitacle H du véhicule.

Un ventilateur classique, non représenté sur les figures, permet de faire circuler un flux d'air à travers les échangeurs froid 32 et chaud 39.

La pompe à chaleur 12, raccordée aux premier et second échangeurs thermiques 24 , 34 est agencée par exemple dans le compartiment moteur du véhicule.

Le fluide frigorigène circulant dans le circuit principal 14 est d'un type classique. Ce fluide frigorigène est choisi par exemple parmi un dérivé chloré et fluoré du méthane ou de l'éthane (Fréon), un hydrocarbure, l'ammoniac ou le dioxyde de carbone. Le liquide caloporteur circulant dans le premier 26 ou second 36 circuit secondaire est de préférence un mélange d'eau et d'antigel (glycol).

Le raccordement des deux circuits secondaires 26, 36 de liquide caloporteur, respectivement aux échangeurs extérieur 30, froid 32 et chaud 39, est réalisé au moyen de vannes de type trois voies, à savoir une vanne 40 du premier circuit secondaire, dite vanne d'échangeur extérieur, une vanne 42 du second circuit secondaire et d'une vanne 44 commune aux deux circuits secondaires.

On a également représenté sur la figure 1 un circuit 46 de liquide de refroidissement d'un organe exothermique du véhicule muni d'une branche 48, dite branche aérotherme. La branche aérotherme 48 est munie d'une pompe classique 50. Dans l'exemple illustré, l'organe exothermique est un moteur du véhicule. Ce moteur, destiné à mouvoir le véhicule, est de préférence de type thermique. Toutefois, en variante, le moteur peut être d'un autre type, notamment électrique.

Le liquide caloporteur circulant dans la branche aérotherme 48 est de préférence, comme le liquide caloporteur circulant dans les circuits secondaires 26, 36, un mélange d'eau et d'antigel (glycol).

Le premier circuit secondaire 26 peut être raccordé sélectivement aux deux extrémités amont 48A et aval 48B de la branche aérotherme 48. À cet effet, le premier circuit secondaire 26 comprend :
- des moyens amont de raccordement sélectif à l'extrémité amont 48A de la branche aérotherme comportant la vanne 40 d'échangeur extérieur ainsi qu'une vanne de type trois voies, dite vanne 52 de branche aérotherme, et
- des moyens aval de raccordement sélectif à l'extrémité aval 48B de la branche aérotherme comportant une vanne 54 de type trois voies.

La vanne 40 d'échangeur extérieur est munie d'une première voie raccordée à la sortie du premier échangeur thermique 24 fluide frigorigène/liquide caloporteur, d'une deuxième voie raccordée à l'entrée de l'échangeur extérieur 30 et d'une troisième voie raccordée à la vanne 52 de branche aérotherme.

La vanne 42 du second circuit secondaire 36 est munie d'une première voie raccordée à la sortie du second échangeur thermique 34 fluide frigorigène/liquide caloporteur de la source chaude, d'une deuxième voie raccordée à l'entrée de l'échangeur extérieur 30 et d'une troisième voie raccordée à l'entrée de l'échangeur chaud 39.

La vanne 44, commune aux premier 26 et second 36 circuits secondaires de liquide caloporteur, est munie d'une première voie raccordée à l'entrée du premier échangeur thermique 24 fluide frigorigène/liquide caloporteur de la source froide, d'une deuxième voie raccordée à l'entrée du second échangeur thermique 34 fluide frigorigène/liquide caloporteur de la source chaude et d'une troisième voie raccordée à la sortie de l'échangeur extérieur 30.

La vanne 52 de branche aérotherme est munie d'une première voie raccordée indirectement à la sortie du premier échangeur thermique 24 fluide frigorigène/liquide caloporteur, par l'intermédiaire de la troisième voie de la vanne 40 d'échangeur extérieur, d'une deuxième voie raccordée à l'extrémité amont 48A de la branche aérotherme et d'une troisième voie raccordée à l'entrée de l'échangeur froid 32.

La vanne 54 est munie d'une première voie raccordée à l'extrémité aval 48B de la branche aérotherme, d'une deuxième voie raccordée à l'entrée du premier échangeur thermique 24 fluide frigorigène/liquide caloporteur et d'une troisième voie raccordée à l'entrée de l'échangeur chaud 39. La vanne 54 permet donc de raccorder sélectivement l'extrémité aval 48B. de la branche aérotherme à l'entrée de l'échangeur chaud 39.

Les vannes 40 à 44, 52 et 54 sont commandées par des moyens classiques électriques, mécaniques, termomécaniques ou pneumatiques.

La figure 1 illustre le dispositif 10 dans une configuration de chauffage de l'habitacle. Dans ce cas, la vanne 42 est réglée de manière à raccorder le second circuit secondaire 36 de liquide caloporteur à l'échangeur chaud 39. Par ailleurs, dans une première phase de fonctionnement, les vannes 40, 52 et 54 sont réglées de façon à raccorder le premier circuit secondaire 26 de liquide caloporteur à la branche aérotherme 48.

Le liquide caloporteur du premier circuit secondaire 26 prélève des calories de la branche aérotherme 48 et les restitue au fluide frigorigène vaporisé, par l'intermédiaire du premier échangeur thermique 24 fluide frigorigène/liquide caloporteur.

Le liquide caloporteur du second circuit secondaire 36 prélève des calories dans le fluide frigorigène condensé, par l'intermédiaire du second échangeur thermique 34 fluide frigorigène/liquide caloporteur, et les restitue dans l'habitacle, par l'intermédiaire de l'échangeur chaud 39.

À titre d'exemple, on considère que l'organe exothermique refroidi par le liquide circulant dans la branche aérotherme 48 est un moteur Diesel de 2 litres à injection directe. On considère également que la température du moteur est, initialement, celle de l'extérieur du véhicule, à savoir -18°C. Environ deux minutes après son démarrage, le moteur Diesel délivre dans la branche aérotherme 48 une puissances de 1,25 kW, la température du liquide de refroidissement dans cette branche aérotherme 48 atteignant environ 0°C. Le coefficient de rendement de la pompe à chaleur 12 étant de l'ordre de 3, la puissance récupérée par la source chaude 18 est d'environ 4,5 kW, la température du fluide caloporteur en condensation dans cette source chaude 18 atteignant environ 30°C. La puissance de la source chaude 18 est transférée à l'habitacle H par l'intermédiaire de l'échangeur chaud 39.

Dans une deuxième phase du fonctionnement du dispositif 10, notamment lorsque le liquide de refroidissement du moteur atteint une température suffisante, par exemple de l'ordre de 83° C, la pompe à chaleur 12 est arrêtée (arrêt du compresseur 20 et des pompes 28 et 38) puis la vanne 54 est réglée de façon à raccorder l'extrémité aval 48B de la branche aérotherme à l'entrée de l'échangeur chaud 39. Les calories fournies à l'habitacle H proviennent alors de la branche aérotherme 48 par l'intermédiaire de l'échangeur chaud 39 raccordé à cette branche 48.

On notera que les vannes peuvent être réglées suivant d'autres configurations adaptées pour chauffer l'habitacle H. En particulier, le réglage des vannes 40 et 44 peut être modifié par rapport à celui de la figure 1 de façon à raccorder le premier circuit secondaire 26 de liquide caloporteur à l'échangeur extérieur 30. Cette configuration est adaptée lorsque le la température extérieure du véhicule n'est pas trop faible.

Pour configurer le dispositif de régulation thermique 10 en mode de réfrigération de l'habitacle du véhicule, on règle les vannes 40 à 44 de manière à raccorder le premier circuit secondaire 26 de liquide caloporteur à l'échangeur froid et le second circuit secondaire 36 de liquide caloporteur à l'échangeur extérieur 30.

Dans ce cas, le liquide caloporteur du premier circuit secondaire 26 prélève des calories dans l'habitacle, par l'intermédiaire de l'échangeur froid 32, et les restitue au fluide frigorigène vaporisé, par l'intermédiaire du premier échangeur thermique 24 fluide frigorigène/liquide caloporteur. Par ailleurs, le liquide caloporteur du second circuit secondaire 36 prélève des calories au fluide frigorigène condensé, par l'intermédiaire du second échangeur thermique 34 fluide frigorigène/liquide caloporteur, et les évacue à l'extérieur du véhicule, par l'intermédiaire de l'échangeur extérieur 30.

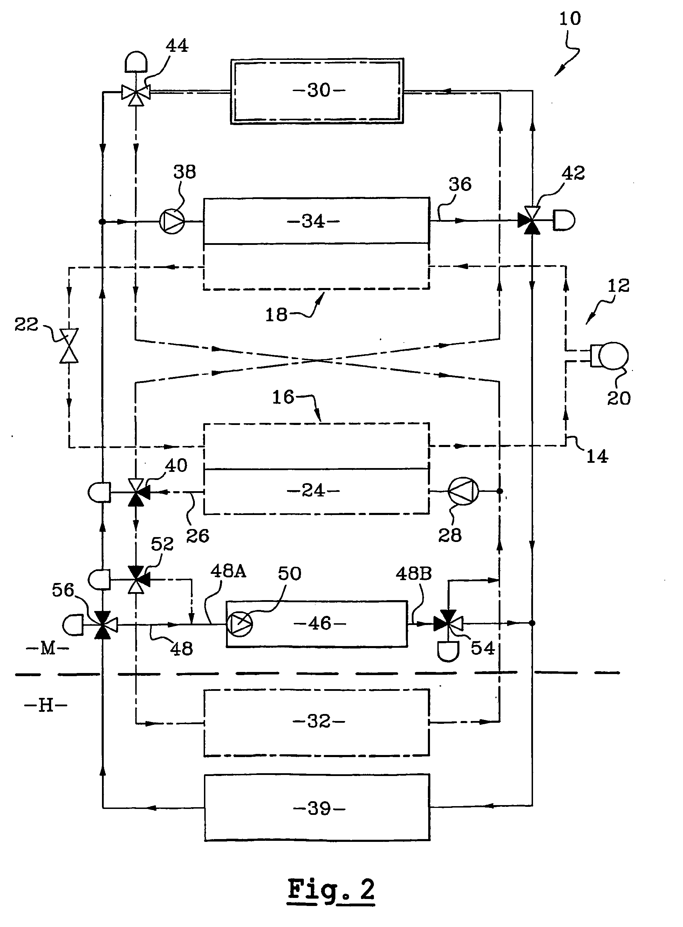

Sur les figures 2 à 4, on a représenté le dispositif de régulation thermique 10 selon des deuxième, troisième et quatrième modes de réalisation de l'invention. Sur ces figures 2 à 4, les éléments analogues à ceux des figures précédentes sont désignés par des références identiques.

Dans le deuxième mode de réalisation de l'invention illustré sur la figure 2, une vanne 56, de type trois voies, permet de raccorder sélectivement la sortie de l'échangeur chaud 39 au second circuit secondaire 36 de liquide caloporteur et à la branche aérotherme 48. Cette vanne 56 est munie d'une première voie raccordée à la sortie de l'échangeur chaud 39, d'une deuxième voie raccordée à l'entrée du second échangeur thermique 34 et d'une troisième voie raccordée à l'extrémité amont 48A de la branche aérotherme.

La vanne 56 augmente le nombre de configurations possibles de fonctionnement du dispositif 10.

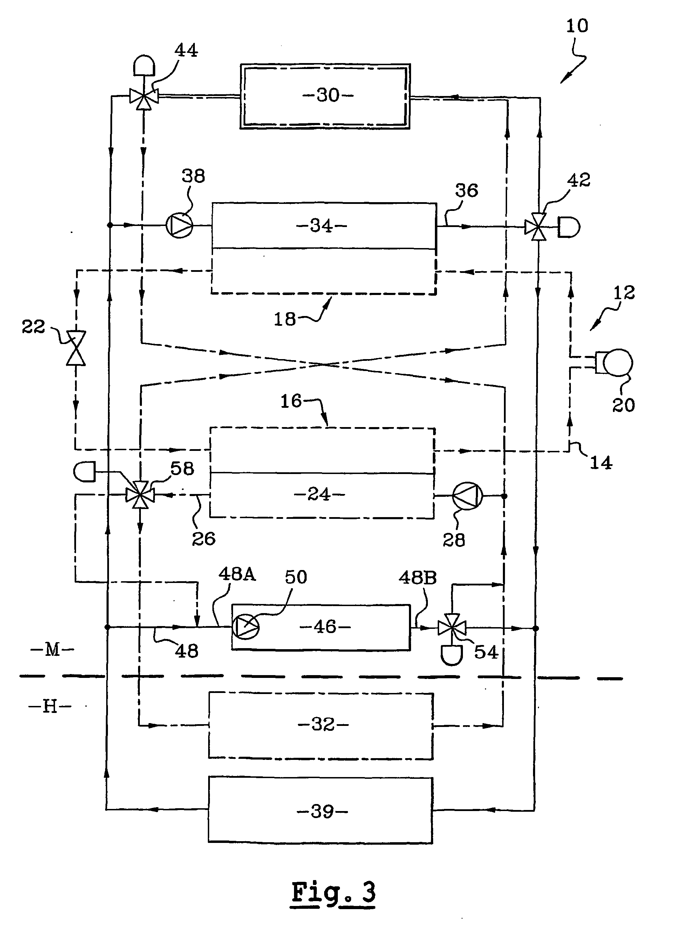

Dans le troisième mode de réalisation de l'invention illustré sur la figure 3, une vanne 58 de branche aérotherme, de type quatre voies, remplace la vanne 40 d'échangeur extérieur et la vanne 52 de branche aérotherme du premier mode de réalisation de l'invention. La vanne 58 comprend trois voies analogues à celles de la vanne 52 (dont une voie raccordée directement à la sortie du premier échangeur thermique 24 fluide frigorigène/liquide caloporteur) ainsi qu'une quatrième voie raccordée à l'entrée de l'échangeur extérieur 30.

Les vannes 56 et 58 sont commandées par des moyens classiques électriques, mécaniques, termomécaniques ou pneumatiques.

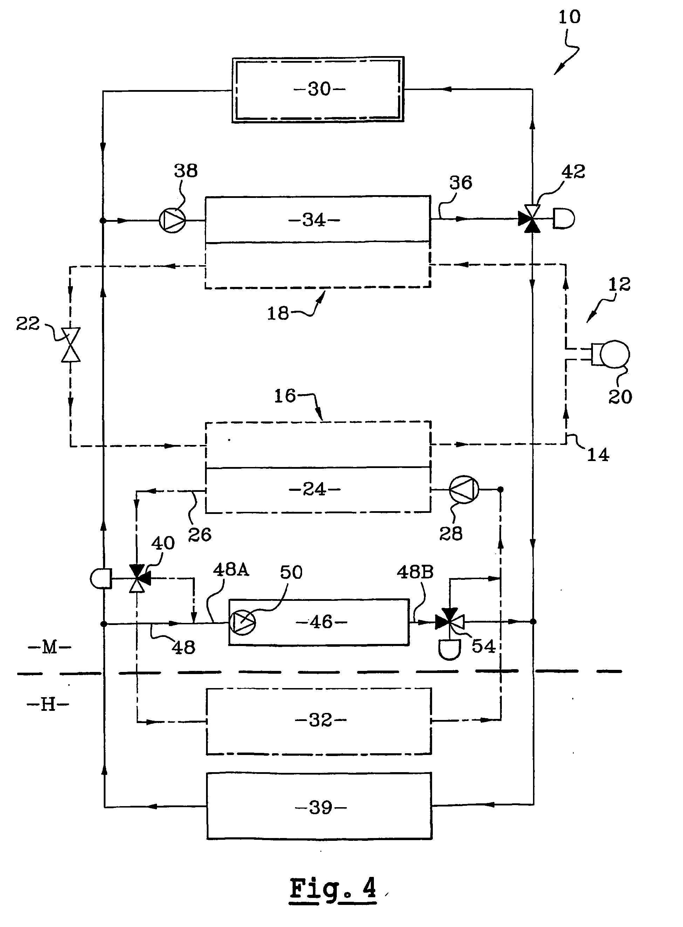

Le quatrième mode de réalisation de l'invention illustré sur la figure 4, diffère de celui illustré sur la figure 1, en ce que les vannes 44 et 52 sont supprimées. Dans ce dernier mode de réalisation simplifié, la source froide 16 ne peut pas être raccordée à l'échangeur extérieur 30. Le quatrième mode de réalisation de l'invention est adapté au cas où l'énergie apportée par la branche aérotherme 48 est suffisante pour obtenir un fonctionnement efficace de la pompe à chaleur 12 en mode chauffage de l'habitacle.

Bien entendu, les différents modes de réalisation de l'invention décrits ci-dessus peuvent être combinés entre eux.

Parmi les avantages de l'invention, on notera que le couplage thermique de la source froide avec la branche aérotherme du véhicule optimise le rendement du dispositif de régulation thermique lorsque ce dernier est utilisé pour chauffer l'habitacle du véhicule, ceci en assurant une montée en température de l'habitacle particulièrement rapide.

## Revendications

1. Dispositif de régulation thermique pour véhicule automobile, du type comprenant :
- une pompe à chaleur (12) comportant un circuit principal (14) de fluide frigorigène à compression prélevant des calories d'une source froide (16) pour les transférer vers une source chaude (18),
- la source froide (16) comportant un premier échangeur thermique (24) fluide frigorigène/liquide caloporteur couplant thermiquement le circuit principal (14) de fluide frigorigène à un premier circuit secondaire (26) de liquide caloporteur,
- la source chaude (18) comporte un second échangeur thermique (34) fluide frigorigène/liquide caloporteur couplant thermiquement le circuit principal (14) de fluide frigorigène à un second circuit secondaire (36) de liquide caloporteur,
**caractérisé en ce que** le premier circuit secondaire (26) comprend des premiers moyens (40, 52, 54) de raccordement sélectif aux extrémités amont (48A) et aval (48B) d'une branche (48) d'un circuit (46) de liquide de refroidissement d'un moteur thermique du véhicule, dite branche aérotherme, et peut être raccordé sélectivement à un échangeur thermique dit froid (32) à l'aide des premiers moyens de raccordement sélectif (40, 52), et **en ce que** le second circuit secondaire (36) de liquide caloporteur est muni de deuxièmes moyens (42) de raccordement sélectif à un échangeur thermique dit chaud (39), les premiers moyens de raccordement sélectif comprenant une vanne (54) munie :
- d'une première voie raccordée à l'extrémité aval (48B) de la branche aérotherme (48),
- d'une deuxième voie raccordée à l'entrée du premier échangeur thermique (24) fluide frigorigène/liquide caloporteur, et
- d'une troisième voie raccordée à l'entrée de l'échangeur chaud (39).

2. Dispositif selon la revendication 1, **caractérisé en ce que** les premiers moyens de raccordement sélectif comprennent des premiers moyens amont (40, 52) de raccordement à l'extrémité amont (48A) de la branche aérotherme (48) et des premiers moyens aval (54) de raccordement à l'extrémité aval (48B) de cette branche aérotherme (48).

3. Dispositif selon la revendication 1 ou 2, **caractérisé en ce que** l'échangeur froid (32) est un échangeur liquide caloporteur/air.

4. Dispositif selon la revendication 2 prise seule ou en combinaison avec la revendication 3, **caractérisé en ce que** les premiers moyens amont de raccordement sélectif comprennent une vanne, dite vanne (52 ;58) de branche aérotherme, munie d'au moins trois voies, une première voie étant raccordée à la sortie du premier échangeur thermique (24) fluide frigorigène/liquide caloporteur, une deuxième voie étant raccordée à l'extrémité amont (48A) de la branche aérotherme (48) et une troisième voie étant raccordée à l'entrée de l'échangeur froid (32).

5. Dispositif selon l'une quelconque des revendications 1 à 4, **caractérisé en ce que** le premier circuit secondaire (26) peut être raccordé sélectivement à un échangeur thermique dit extérieur (30) à l'aide des premiers moyens (40) de raccordement sélectif.

6. Dispositif selon les revendications 4 et 5 prises ensemble, **caractérisé en ce que** les premiers moyens amont de raccordement sélectif comprennent une vanne, dite vanne (40) d'échangeur extérieur, de type trois voies, munie d'une première voie raccordée à la sortie du premier échangeur thermique (24) fluide frigorigène/liquide caloporteur, d'une deuxième voie raccordée à l'entrée de l'échangeur extérieur (30) et d'une troisième voie raccordée à la première voie de la vanne (52) de branche aérotherme.

7. Dispositif selon les revendications 4 et 5 prises ensemble, **caractérisé en ce que** la vanne (58) de branche aérotherme comprend une quatrième voie raccordée à l'entrée de l'échangeur extérieur (30).

8. Dispositif selon l'une quelconque des revendications 5 à 7, **caractérisé en ce que** l'échangeur extérieur (30) est un échangeur liquide caloporteur/air.

9. Dispositif selon la revendication 5 prise en combinaison avec l'une quelconque des revendications 1 à 8, **caractérisé en ce que** le second circuit secondaire (36) peut être raccordé sélectivement à l'échangeur extérieur (30) à l'aide des deuxièmes moyens de raccordement sélectif.

10. Dispositif selon l'une quelconque des revendications 1 à 9, **caractérisé en ce qu'**il comprend des troisièmes moyens (56) de raccordement sélectif de la sortie de l'échangeur chaud (39) au second circuit secondaire (36) de liquide caloporteur et à la branche aérotherme (48).

11. Dispositif selon la revendication 10, **caractérisé en ce que** les troisièmes moyens de raccordement sélectif comprennent une vanne (56), de type trois voles, munie d'une première voie raccordée à la sortie de l'échangeur chaud (39), d'une deuxième voie raccordée à l'entrée du second échangeur thermique (34) et d'une troisième voie raccordée à l'extrémité amont (48A) de la branche aérotherme (48).

12. Dispositif selon l'une quelconque des revendications précédentes, **caractérisé en ce que** l'échangeur chaud (39) est un échangeur liquide caloporteur/air.

13. Dispositif selon l'une quelconque des revendications précédentes, **caractérisé en ce que** le liquide caloporteur du second circuit secondaire (36) est un mélange d'eau est d'antigel.

14. Dispositif selon l'une quelconque des revendications précédentes, **caractérisé en ce que** le liquide caloporteur du premier circuit secondaire (26) et un mélange d'eau et d'antigel.

## Claims

1. Temperature control device for motor vehicle, of type comprising:
- a heat pump (12) including a main compression refrigerant fluid circuit (14) taking heat from a cold source (16) to transfer it to a hot source (18),
- the cold source (16) including a first refrigerant/heat transfer fluid heat exchanger (24) thermally coupling the main refrigerant circuit (14) to a first secondary heat transfer fluid circuit (26),
- the hot source (18) includes a second refrigerant/heat transfer fluid heat exchanger (34) thermally coupling the main refrigerant circuit (14) to a second secondary heat transfer fluid circuit (36),
**characterised in that** the first secondary circuit (26) comprises first means (40, 52, 54) for selective connection to the upstream (48A) and downstream (48B) ends of a branch (48) of a coolant circuit (46) of a vehicle thermal engine, called the unit heater branch, and can be selectively connected to a "cold" heat exchanger (32) using the first selective connection means (40, 52), and **in that** the second secondary heat transfer fluid circuit (36) is equipped with second means (42) for selective connection to a "hot" heat exchanger (39), the first selective connection means comprising a valve (54) equipped:
- with a first way connected to the downstream end (48B) of the unit heater branch (48),
- with a second way connected to the input of the first refrigerant/heat transfer fluid heat exchanger (24), and
- with a third way connected to the input of the hot exchanger (39).

2. Device according to claim 1, **characterised in that** the first selective connection means comprise first upstream means (40, 52) for connection to the upstream end (48A) of the unit heater branch (48) and first downstream means (54) for connection to the downstream end (48B) of this unit heater branch (48).

3. Device according to claim 1 or 2, **characterised in that** the cold exchanger (32) is a heat transfer fluid/air exchanger.

4. Device according to claim 2 taken alone or in combination with claim 3, **characterised in that** the first upstream selective connection means comprise a valve, called the unit heater branch valve (52; 58), equipped with at least three ways, a first way being connected to the output of the first refrigerant/heat transfer fluid thermal heat exchanger (24), a second way being connected to the upstream end (48A) of the unit heater branch (48) and a third way being connected to the input of the cold exchanger (32).

5. Device according to any of claims 1 to 4, **characterised in that** the first secondary circuit (26) can be selectively connected to an "external" heat exchanger (30) using the first selective connection means (40).

6. Device according to claims 4 and 5 taken together,
**characterised in that** the first upstream selective connection means comprise a three-way valve, called the external exchanger valve (40), equipped with a first way connected to the output of the first refrigerant/heat transfer fluid heat exchanger (24), a second way connected to the input of the external exchanger (30) and a third way connected to the first way of the unit heater branch valve (52).

7. Device according to claims 4 and 5 taken together,
**characterised in that** the unit heater branch valve (58) comprises a fourth way connected to the input of the external exchanger (30).

8. Device according to any of claims 5 to 7, **characterised in that** the external exchanger (30) is a heat transfer fluid/air exchanger.

9. Device according to claim 5 taken in combination with any of claims 1 to 8, **characterised in that** the second secondary circuit (36) can be selectively connected to the external exchanger (30) using the second selective connection means.

10. Device according to any of claims 1 to 9, **characterised in that** it comprises third means (56) for selective connection of the output of the hot exchanger (39) to the second secondary heat transfer fluid circuit (36) and to the unit heater branch (48).

11. Device according to claim 10, **characterised in that** the third selective connection means comprise a three-way valve (56), equipped with a first way connected to the output of the hot exchanger (39), a second way connected to the input of the second heat exchanger (34) and a third way connected to the upstream end (48A) of the unit heater branch (48).

12. Device according to any of the previous claims,
**characterised in that** the hot exchanger (39) is a heat transfer fluid/air exchanger.

13. Device according to any of the previous claims,
**characterised in that** the heat transfer fluid of the second secondary circuit (36) is a mixture of water and antifreeze.

14. Device according to any of the previous claims,
**characterised in that** the heat transfer fluid of the first secondary circuit (26) is a mixture of water and antifreeze.

## Patentansprüche

1. Vorrichtung zur thermischen Regelung für Kraftfahrzeuge, umfassend:
- eine Wärmepumpe (12), die einen Kompressionskältemittel-Hauptkreislauf (14) aufweist, der einer kalten Quelle (16) Kalorien entzieht, um sie zu einer warmen Quelle (18) zu transferieren,
- wobei die kalte Quelle (16) einen ersten Kältemittel/Wärmeübertragungsflüssigkeit-Wärmetauscher (24) aufweist, der den Kältemittel-Hauptkreislauf (14) thermisch an einen ersten Wärmeübertragungsflüssigkeits-Nebenkreislauf (26) koppelt,
- die warme Quelle (18) einen zweiten Kältemittel/Wärmeübertragungsflüssigkeit-Wärmetauscher (34) aufweist, der den Kältemittel-Hauptkreislauf (14) thermisch an einen zweiten Wärmeübertragungsflüssigkeits-Nebenkreislauf (36) koppelt,
**dadurch gekennzeichnet, dass** der erste Nebenkreislauf (26) erste Mittel (40, 52, 54) zum selektiven Anschluss an das stromauf (48A) und das stromab (48B) befindliche Ende eines Zweigs (48) eines Kühlflüssigkeitskreislaufs (46) eines Verbrennungsmotors des Fahrzeugs, bezeichnet als aerothermer Zweig, umfasst und an einen Wärmetauscher, bezeichnet als kalter Wärmetauscher (32), mithilfe der ersten Mittel (40, 52) zum selektiven Anschluss selektiv angeschlossen werden kann, und dass der zweite Wärmeübertragungsflüssigkeits-Nebenkreislauf (36) ausgestattet ist mit zweiten Mitteln (42) zum selektiven Anschluss an einen Wärmetauscher, bezeichnet als warmer Wärmetauscher (39), wobei die ersten Mittel zum selektiven Anschluss ein Ventil (54) umfassen, das versehen ist mit:
- einem ersten Weg, der an das stromab befindliche Ende (48B) des aerothermen Zweigs (48) angeschlossen ist,
- einem zweiten Weg, der an den Einlass des ersten Kältemittel/Wärmeübertragungsflüssigkeit-Wärmetauschers (24) angeschlossen ist, und
- einem dritten Weg, der an den Einlass des warmen Tauschers (39) angeschlossen ist.

2. Vorrichtung nach Anspruch 1, **dadurch gekennzeichnet, dass** die ersten Mittel zum selektiven Anschluss stromauf befindliche erste Mittel (40, 52) zum Anschluss an das stromauf befindliche Ende (48A) des aerothermen Zweigs (48) und stromab befindliche erste Mittel (54) zum Anschluss an das stromab befindliche Ende (48B) dieses aerothermen Zweigs (48) umfassen.

3. Vorrichtung nach Anspruch 1 oder 2, **dadurch gekennzeichnet, dass** der kalte Tauscher (32) ein Wärmeübertragungsflüssigkeit/Luft-Tauscher ist.

4. Vorrichtung nach Anspruch 2 allein oder in Kombination mit Anspruch 3 genommen, **dadurch gekennzeichnet, dass** die stromauf befindlichen ersten Mittel zum selektiven Anschluss ein Ventil, bezeichnet als Ventil (52; 58) für den aerothermen Zweig, umfassen, das mit zumindest drei Wegen versehen ist, und zwar mit einem ersten Weg, der an den Auslass des ersten Kältemittel/Wärmeübertragungsflüssigkeit-Wärmetauschers (24) angeschlossen ist, einem zweiten Weg, der an das stromauf befindliche Ende (48A) des aerothermen Zweigs (48) angeschlossen ist, und einem dritten Weg, der an den Einlass des kalten Tauschers (32) angeschlossen ist.

5. Vorrichtung nach einem der Ansprüche 1 bis 4, **dadurch gekennzeichnet, dass** der erste Nebenkreislauf (26) an einen als äußerer Wärmetauscher (30) bezeichneten Wärmetauscher mithilfe der ersten Mittel (40) zum selektiven Anschluss selektiv angeschlossen werden kann.

6. Vorrichtung nach den Ansprüchen 4 und 5 zusammengenommen, **dadurch gekennzeichnet, dass** die stromauf befindlichen ersten Mittel zum selektiven Anschluss ein Ventil umfassen, bezeichnet als Ventil (40) für den äußeren Tauscher, mit drei Wegen, das versehen ist mit einem ersten Weg, der an den Auslass des ersten Kältemittel/Wärmeübertragungsflüssigkeit-Wärmetauschers (24) angeschlossen ist, einem zweiten Weg, der an den Einlass des äußeren Tauschers (30) angeschlossen ist, und einem dritten Weg, der an den ersten Weg des Ventils (52) für den aerothermen Zweig angeschlossen ist.

7. Vorrichtung nach den Ansprüchen 4 und 5 zusammengenommen, **dadurch gekennzeichnet, dass** das Ventil (58) für den aerothermen Zweig einen vierten Weg umfasst, der an den Einlass des äußeren Tauschers (30) angeschlossen ist.

8. Vorrichtung nach einem der Ansprüche 5 bis 7, **dadurch gekennzeichnet, dass** der äußere Tauscher (30) ein Wärmeübertragungsflüssigkeit/Luft-Tauscher ist.

9. Vorrichtung nach Anspruch 5 in Kombination mit einem der Ansprüche 1 bis 8,
**dadurch gekennzeichnet, dass** der zweite Nebenkreislauf (36) an den äußeren Tauscher (30) mithilfe der zweiten Mittel zum selektiven Anschluss selektiv angeschlossen werden kann.

10. Vorrichtung nach einem der Ansprüche 1 bis 9, **dadurch gekennzeichnet, dass** sie dritte Mittel (56) zum selektiven Anschluss des Auslasses des warmen Tauschers (39) an den zweiten Wärmeübertragungsflüssigkeits-Nebenkreislauf (36) und an den aerothermen Zweig (48) umfasst.

11. Vorrichtung nach Anspruch 10, **dadurch gekennzeichnet, dass** die dritten Mittel zum selektiven Anschluss ein Ventil (56), und zwar ein Drei-Wege-Ventil, umfassen, das versehen ist mit einem ersten Weg, der an den Auslass des warmen Tauschers (39) angeschlossen ist, einem zweiten Weg, der an den Einlass des zweiten Wärmetauschers (34) angeschlossen ist, und einem dritten Weg, der an das stromauf befindliche Ende (48A) des aerothermen Zweigs (48) angeschlossen ist.

12. Vorrichtung nach einem der vorstehenden Ansprüche, **dadurch gekennzeichnet, dass** der warme Tauscher (39) ein Wärmeübertragungsflüssigkeit/Luft-Tauscher ist.

13. Vorrichtung nach einem der vorstehenden Ansprüche, **dadurch gekennzeichnet, dass** die Wärmeübertragungsflüssigkeit des zweiten Nebenkreislaufs (36) ein Gemisch aus Wasser und Frostschutzmittel ist.

14. Vorrichtung nach einem der vorstehenden Ansprüche, **dadurch gekennzeichnet, dass** die Wärmeübertragungsflüssigkeit des ersten Nebenkreislaufs (26) ein Gemisch aus Wasser und Frostschutzmittel ist.
